# EUROPEAN PATENT APPLICATION

(11) **EP 1 975 577 A1**
(43) Date of publication of application: **01.10.2008**
(21) Application number: 07006664.2
(22) Date of filing: 30.03.2007
(51) Int. Cl.: G01G 17/06, G01N 35/00, G01G 21/30

(54) **Device and method for the gravimetric volume determination of liquid volumes and anlyzer system comprising such a device**

(71) Applicant: F.HOFFMANN-LA ROCHE AG, 4070 Basel (CH); Roche Diagnostics GmbH, 68305 Mannheim (DE)
(72) Inventor: Thiel, Markus, 8810 Horgen (CH); Ott, Daniel, 6340 Baar (CH); Kull, Philipp, 8037 Zuerich (CH); Burmester, Jörg, 8053 Zürich (CH)
(74) Representative: Ventocilla, Abraham

(57) **Abstract**

A device for the gravimetric volume determination of liquid volumes. The device comprises a housing (11) having the shape and dimensions of a standard rack used in a clinical diagnostic analyzer system for holding sample or reagent containers, and the following components contained in housing (11): a load cell (12) for gravimetric volume determination, a weighing container (13) for receiving a liquid to be weighed with said load cell (12), a windbreak (14) which shields said weighing container (13) from air flow, an evaporation trap (15) which prevents evaporation of liquid loaded into said weighing container (13), a temperature sensor (21), an air-pressure sensor (31) and a humidness sensor (41) for sensing temperature, air pressure and humidness respectively at predetermined points within said housing (11), and an electronic processing unit for processing electrical output signals delivered by said load cell (12) and by said sensors (21, 31, 41).

## Description

### Field of the invention

The invention concerns a device and a method for the gravimetric volume determination of liquid volumes.

The invention further concerns an analyzer system comprising a device of the above mentioned kind.

### Background

In the field of clinical and molecular chemistry, e.g. in clinical diagnostic analyzer systems like clinical chemistry analyzer systems and molecular clinical diagnostic analyzer systems, it is necessary to measure very small liquid volumes in the microliter and even in the nanoliter range with sufficient accuracy, e.g. for calibrating automatic pipetting devices which are integral part of analyzer systems of the above mentioned kinds. For this purpose the gravimetric volume determination is a preferred method. Conventional methods of this kind require a lot of manual handling and are therefore time consuming. This is so, in particular because the various apparatuses needed for performing gravimetric volume determination are not part of an automated system like a modern automatic clinical diagnostic analyzer system in which most of the necessary operations for carrying out the analysis of biological samples are nowadays highly automated and require very few manual handling steps. For instance, in the case of a conventional gravimetric volume determination each liquid volume to be weighted has to be manually pipetted into a weighting container of an especial weighting instrument, the control of the procedure and evaluation of results for the gravimetric volume determination are carried out by a computer connected with the weighting instrument, and in order to convert the weighing result to the volume to be determined, the pertinent temperature, air pressure and humidness data has to be manually entered to the computer prior to testing.

In particular quality control in the manufacture of clinical diagnostic analyzer systems and field tests of such systems require an important number of gravimetric volume determinations. In addition periodic calibrations have to be performed by means of gravimetric volume determinations analyzer systems which are already installed and in operation. There is therefore a need for substantially reducing the amount of manual work and the amount of time required for such determinations in already existent and also in future automatic clinical diagnostic analyzer systems.

### Summary of the invention

A first aim of the invention is therefore to provide a device and a method for performing gravimetric volume determinations which makes possible to substantially reduce the amount of manual work and the amount of time required for performing reliable gravimetric volume determinations in already existent and future automatic clinical diagnostic analyzer systems.

A second aim of the invention is to provide a diagnostic analyzer system which comprises a device

According to a first aspect of the invention the above mentioned first aim is achieved by means of a device defined by claim 1 and by a method defined by claim 6. Claims 2 to 5 define preferred embodiments of a device according to the invention.

According to a third aspect of the invention the above mentioned second aim is achieved by a diagnostic analyzer system defined by claim 7.

The main advantage obtained with a device according to the invention is that such a device is adapted for being incorporated into already existent or future diagnostic analyzers. A device according to the invention thus makes possible to integrate the technical means necessary for performing reliable gravimetric volume determinations into already existent and future automatic clinical diagnostic analyzer systems and thereby the time and work required for performing reliable gravimetric volume determinations in such analyzers is substantially reduced. This is so, because all above mentioned manual steps of the conventional method for performing gravimetric volume determinations are carried out automatically, e.g. the pipetting of liquids into the weighing container is carried out with the automatic pipetting device of the analyzer, and the necessary temperature, air pressure and humidness data is obtained by sensors which are part of the device according to the invention, and such data is directly transmitted to an electronic unit for data processing which is also part of the device according to the invention. With a device according to the invention gravimetric volume determinations in a clinical diagnostic analyzer system are thus carried out automatically with a minimum of manual work required. Consequently the efficiency of existent clinical diagnostic analyzer systems is improved, because the delays caused by slowly performed gravimetric volume determinations are eliminated. Moreover the incorporation of the device according to the invention into a clinical diagnostic analyzer system protects the delicate equipment used for gravimetric volume determinations from external disturbances and therefore more reliable measurement results are obtained.

### Brief description of the drawings

The subject invention will now be described in terms of its preferred embodiments with reference to the accompanying drawing. These embodiments are set forth to aid the understanding of the invention, but are not to be construed as limiting.
Fig. 1 shows a schematic top plan view of an embodiment of a device according to the invention.
Fig. 2 shows a schematic cross-sectional view along the length symmetry axis of the embodiment shown by Fig. 1.

### Reference numerals used in drawings

11 housing
12 load cell / weighing cell
13 weighing container
14 windbreak
15 evaporation trap
16 electronic processing unit
17 battery
21 temperature sensor
22 temperature sensor element
23 temperature sensor element
31 air-pressure sensor
32 air-pressure sensor element
33 air-pressure sensor element
41 humidness sensor
42 humidness sensor element
43 humidness sensor element
51 RS232-interface connection
52 USB-interface connection
53 Bluetooth-interface connection
61 identification barcode label

### Detailed description of the invention

Preferred embodiments of a device and a method for the gravimetric volume determination of liquid volumes according to the invention as well as a clinical diagnostic analyzer comprising a device according to the invention are described hereinafter.

### Example of a device according to the invention

A preferred embodiment of a device for the gravimetric volume determination of liquid volumes according to the invention is described hereinafter with reference to the accompanying drawing.

The structure chosen for a device according to the invention is based on the facts that each analyzer system has at least one standard rack for holding sample or reagent containers, that this rack has a specified shape and dimensions, and that the system includes areas for receiving such at least one rack.

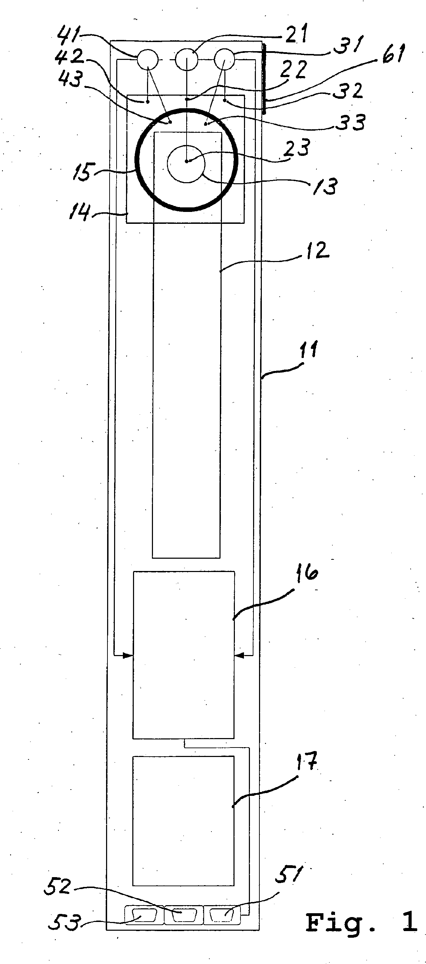

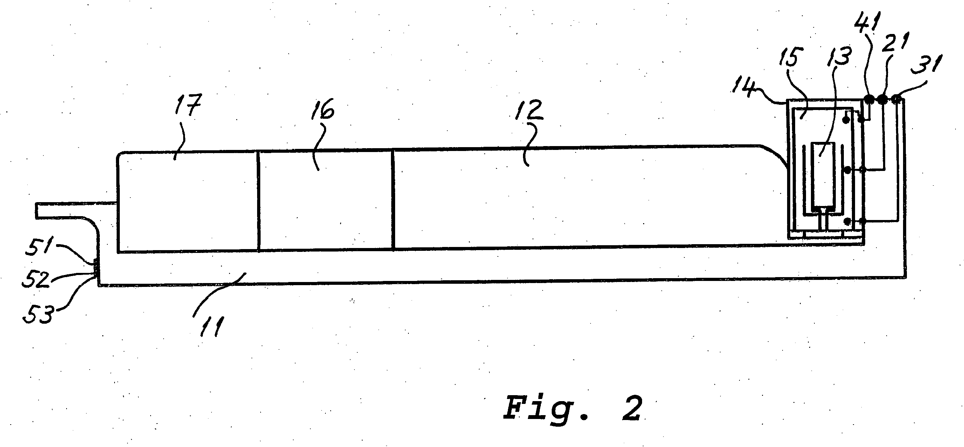

As shown by Figures 1 and 2 such a device comprises a housing 11 which has the same shape and dimensions as a standard rack used in a clinical diagnostic analyzer system for holding sample or reagent containers.

As shown by Figures 1 and 2 the following components are contained in housing 11:
a load cell 12 (also called a weighing cell) for gravimetric volume determination,
a weighing container 13 for receiving a liquid to be weighed with load cell 12,
a windbreak 14 which shields weighing container 13 from air flow,
an evaporation trap 15 which prevents evaporation of liquid loaded into weighing container 13
a temperature sensor 21, an air-pressure sensor 31 and a humidness sensor 41 for sensing temperature, air pressure and humidness respectively at predetermined points within housing 11, and
an electronic processing unit 16 for processing electrical signals delivered by load cell 12 and by sensors 21, 31, 41.

Electronic processing unit 16 has e.g. USB-, Bluetooth and RS-232 interface connections.

The device shown by Figures 1 and 2 includes all necessary electrical connections connecting load cell 12 and sensors 21, 31, 41 to electronic processing unit 16, but these connections are not shown in Figures 1 and 2.

In a preferred embodiment load cell 12 is e.g. a 5-digit digital load cell for weights in the range from 0 to 5 grams. Such a load cell is suitable for gravimetric volume determinations in the nanoliter and microliter range.

In a preferred embodiment temperature sensor 21 comprises a sensor element 22 for sensing the temperature of weighing container 13 and a sensor element 23 for sensing the temperature within windbreak 14.

In a preferred embodiment air-pressure sensor 31 comprises a sensor element 32 for sensing air pressure within windbreak 14 and a sensor element 33 for sensing air pressure within evaporation trap 15.

In preferred embodiment humidness sensor 41 comprises a sensor element 42 for sensing humidness within windbreak 14 and a sensor element 43 for sensing humidness within evaporation trap 15.

In a preferred embodiment housing 11 further contains a rechargeable battery 17 for supplying electrical energy required for operating load cell 12 and electronic processing unit 16.

A preferred embodiment of a device according to the invention further comprises an identification barcode label 61 attached to the outer surface of one side of housing 11.

The operation of the device shown by Figures 1 and 2 is essentially as follows. This device is positioned in the clinical diagnostic analyzer system in a location similar as the one provided therein for receiving a rack for samples or a rack for reagents. An amount of a liquid the volume of which is to be determined is pipetted into weighing container 13 automatically with the automatic pipetting device of the analyzer and after the weighing step is done the liquid is removed from weighing container 13 by the same automatic pipetting device. Electrical output signals representative of the temperature, air pressure and humidness data obtained with sensors 21, 31, 41 respectively as well as the output signal representative of the weighing result obtained with load cell 12 are each directly transmitted to electronic processing unit 16. Electronic processing unit 16 calculates the volume corresponding to the measured weighing result taking into account all above mentioned parameters (temperature, air pressure, humidness) and provides an output signal corresponding to the calculated volume value to the electronic data processing unit of the clinical diagnostic analyzer system. Display and/or further processing of the calculated volume value is performed by suitable means available in the clinical diagnostic analyzer system.

### Example of a method according to the invention

An example of a method for the gravimetric volume determination of liquid volumes carried out with the above described device according to the invention comprises the following steps:
(a) introducing a liquid sample to be weighed into the load cell 12 and transmitting an output signal generated by the load cell 12 to the electronic processing unit 16, said output signal being representative of the weight of said sample,
(b) measuring temperature of the environment of load cell 12 with the temperature sensor 21 and transmitting an output signal generated by this sensor to the electronic processing unit 16,
(c) measuring air pressure of the environment of load cell 12 with the air-pressure sensor 31 and transmitting an output signal generated by this sensor to the electronic processing unit 16,
(d) measuring humidness of the environment of load cell 12 with humidness sensor 41 and transmitting an output signal generated by this sensor to the electronic processing unit 16,
(e) processing in the electronic processing unit 16 the output signals generated according to steps (a) to (d), said processing including the calculation of the volume of the liquid sample which corresponds to the weight of the liquid sample measured with load cell 12.

A preferred embodiment of a method according to the invention comprises the following additional steps:
(1) acclimatization of the load cell 12,
(2) evaluating the measured values of the temperature, air pressure and humidness of the environment of load cell 12,
(3) filling the evaporation trap 15 with a liquid,
(4) filling the weighing container with a calibrator liquid,
(5) measuring and evaluating the temperature, air pressure and humidness within the interior of windbreak 14,
(6) calculating and evaluating the evaporation rate per time interval,
(7) starting the measurement when the conditions (including temperature, air pressure and humidness) are within acceptable limits,
(8) pipetting from or into the weighing container
(9) simultaneously recording all measured values (weight, temperature, etc),
(10) computing the result (optionally in real time): Volume = (weight) * density coefficient.

### Example of an analyzer system according to the invention

An example of a diagnostic analyzer system in which a device according to the invention is used comprises at least one standard rack for receiving sample and/or reagent containers and an area for receiving at least one such rack. Since the device according to the invention has a housing which has the same shape and dimensions as the sample and/or reagent rack of the analyzer, the device according to the invention is adapted for being installed in the analyzer at a location otherwise available for a standard sample and/or reagent rack of the analyzer.

### Example(s) of preferred uses of a device according to the invention

The following are some examples of preferred uses of a method and a device according to the invention:
- Disposable free verification of pipetted volumes with discretionary repetition rate or any repetition rate.
- Execution of automatic calibration procedures for the verification of the accuracy of volumes pipetted with instruments being used in their normal field of use.
- Fully or partially automated determination of pipetting parameters.
- Study of the pipetting behaviour of different liquids.

Although preferred embodiments of the invention have been described using specific terms, such description is for illustrative purposes only, and it is to be understood that changes and variations may be made without departing from the spirit or scope of the following claims.

## Claims

1. A device for the gravimetric volume determination of liquid volumes comprising
(a) a housing (11) having the shape and dimensions of a standard rack used in a clinical diagnostic analyzer system for holding sample or reagent containers,
(b) the following components being contained in said housing (11):
a load cell (12) for gravimetric volume determination,
a weighing container (13) for receiving a liquid to be weighed with said load cell (12),
a windbreak (14) which shields said weighing container (13) from air flow,
an evaporation trap (15) which prevents evaporation of liquid loaded into said weighing container (13),
a temperature sensor (21), an air-pressure sensor (31) and a humidness sensor (41) for sensing temperature, air pressure and humidness respectively at predetermined points within said housing (11), and
an electronic processing unit (16) for processing electrical output signals delivered by said load cell (12) and by said sensors (21, 31, 41).

2. A device according to claim 1 wherein said load cell (12) is a digital load cell for gravimetric volume determination in the nanoliter and microliter range.

3. A device according to claim 1 or claim 2 wherein
said temperature sensor (21) comprises a sensor element (22) for sensing temperature of said weighing container (13) and a sensor element (23) for sensing temperature within said windbreak (14),
said air-pressure sensor (31) comprises a sensor element (32) for sensing air pressure within said windbreak (14) and a sensor element (33) for sensing air pressure within said evaporation trap (15), and
said humidness sensor (41) comprises a sensor element (42) for sensing humidness within said windbreak (14) and a sensor element (43) for sensing humidness within said evaporation trap (15).

4. A device according to any of the preceding claims **characterized in that** said components contained in said housing (11) further comprise a battery (17) for supplying electrical energy required for operating said load cell (12) and said electronic processing unit (16).

5. A device according to any of the preceding claims **characterized in that** an identification barcode label (61) is attached to the outer surface of one side of said housing (11).

6. A method for the gravimetric volume determination of liquid volumes with a device according to claim 1, said method comprising
(a) introducing a liquid sample to be weighed into the load cell (12) and transmitting an output signal generated by the load cell (12) to the electronic processing unit (16), said output signal being representative of the weight of said sample,
(b) measuring temperature of the environment of load cell (12) with the temperature sensor (21) and transmitting an output signal generated by this sensor to the electronic processing unit (16),
(c) measuring air pressure of the environment of load cell (12) with the air-pressure sensor (31) and transmitting an output signal generated by this sensor to the electronic processing unit (16),
(d) measuring humidness of the environment of load cell (12) with humidness sensor (41) and transmitting an output signal generated by this sensor to the electronic processing unit (16),
(e) processing in the electronic processing unit (16) the output signals generated according to steps (a) to (d), said processing including the calculation of the volume of the liquid sample which corresponds to the weight of the liquid sample measured with load cell (12).

7. A clinical diagnostic analyzer system comprising a device for the gravimetric volume determination of liquid volumes according to any of claims 1 to 5.
